# FASCICULE DE BREVET EUROPEEN

(11) **EP 1 533 167 B1**
(45) Date de publication et mention de la délivrance du brevet: **20.12.2006**
(21) Numéro de dépôt: 04292552.9
(22) Date de dépôt: 27.10.2004
(51) Int. Cl.: B60K 6/04

(54) **Dispositif de fixation d'une machine électrique dans un carter d'embrayage d'un véhicule automobile**
Haltevorrichtung einer elektrischen Maschine in einem Kupplungsgehäuse eines Fahrzeugs
Fixing device for an electric machine in a clutch housing of an automobile

(30) Priorité: 19.11.2003 FR 0313542
(43) Date de publication de la demande: 25.05.2005
(73) Titulaire: Peugeot Citroën Automobiles S.A., 78140 Vélizy Villacoublay (FR)
(72) Inventeur: Hulin, René, 92500 Rueil Malmaison (FR)
(74) Mandataire: Thinat, Michel

(56) Documents cités:
- EP-A- 1 279 828
- US-A1- 2001 015 586
- US-A1- 2003 151 319

## Description

L'invention concerne un carter d'embrayage d'un véhicule automobile. L'invention s'applique par exemple à la fixation d'un alternateur-démarreur dans un carter d'embrayage situé entre le carter de boîte de vitesses et le carter moteur du véhicule automobile.

Selon une conception courante, une machine électrique telle qu'un alternateur-démarreur est placée coaxialement avec le moteur à combustion, après l'embrayage, et fixée à l'intérieur du carter d'embrayage. La machine électrique est liée en rotation avec le moteur à combustion par l'intermédiaire de plots en caoutchouc, qui sont fixés sur le couvercle du mécanisme d'embrayage et logés dans des alvéoles du moyeu du rotor de la machine électrique prévues à cet effet.

US 2001/015586 décrit un dispositif d'accouplement entre le rotor d'une machine électrique tournante réversible et le vilebrequin d'un moteur thermique. Le moyeu de support du rotor de la machine électrique peut être accouplé au couvercle d'embrayage par un certain nombre de blocs en matériau élastomère tel que silicone. Ces blocs sont encastrés dans des cavités conjuguées.

Ainsi, la liaison entre la machine électrique et le moteur à combustion, notamment l'arbre vilebrequin du moteur, est réalisée moyennant des plots en caoutchouc pour rattraper des défauts tels qu'un alignement imparfait entre l'axe moteur et l'axe de la machine électrique, elle-même fixée dans le carter d'embrayage, une différence de comportement des deux éléments reliés résultant d'une différence de type de palier entre celui de la machine électrique, qui est en général un roulement, et celui du moteur à combustion, qui est en général un palier lisse, et des déformations du vilebrequin quand le moteur à combustion est chargé.

Les plots en caoutchouc apportent à la fois la souplesse nécessaire pour pallier les défauts de montage et des caractéristiques différentes des éléments montés, et la rigidité nécessaire pour la transmission des forces, notamment la transmission du couple. Le caoutchouc est donc choisi pour ses qualités de raideur, mais aussi d'amortissement ; le caoutchouc de synthèse notamment en raison de la température ambiante dans laquelle fonctionne le système.

Pour réaliser la fonction de transmission du couple entre la machine électrique et le moteur à combustion, mais aussi pour éviter tout déplacement entre les surfaces métalliques en appui sur le caoutchouc et le caoutchouc lui-même, le caoutchouc est installé avec une précontrainte radiale au montage. Cette précontrainte est obtenue en plaçant les plots en caoutchouc sous un faible angle sur les surfaces et en les forçant ensuite dans le sens axial de la boîte, qui contient la machine électrique, vers le moteur thermique. On impose ainsi des contraintes sur les butées axiales de l'arbre vilebrequin sur le roulement du rotor, contraintes qui peuvent subsister pendant le rodage, le temps que les pièces se mettent en place. De plus, cette opération de montage peut difficilement être intégrée dans un processus industriel actuel par le temps et l'outillage qu'elle impose.

Il convient aussi de remarquer que l'ensemble des pièces constitué du rotor de la machine électrique qui agit comme un volant, la liaison en caoutchouc qui est élastique et qui agit donc comme un ressort, et le moteur à combustion qui est l'excitateur, forment un système résonnant dont le mode est, compte tenu des masses mises en jeu, une source de forte vibration, voire très destructeur. La seule solution pour éviter ces problèmes est d'augmenter la raideur des plots de caoutchouc de façon que la fréquence de ce mode de résonance se trouve assez nettement en dehors des zones de vitesses d'utilisation du moteur à combustion.

Cependant, le fait de devoir utiliser des plots en caoutchouc plus raides complique encore plus le montage décrit plus haut.

Par ailleurs, il s'est avéré nécessaire de pourvoir les plots en caoutchouc d'une armature extérieure, et en général aussi d'une armature intérieure pour éviter une forte usure par les surfaces métalliques complémentaires, puisqu'il s'est avéré impossible d'éviter le décollement desdites surfaces en fonctionnement sous très forte charge et donc leur déplacement relatif transversal.

Le but de l'invention est atteint avec un carter d'embrayage d'un véhicule automobile selon la revendication 1 le carter d'embrayage comportant un couvercle d'embrayage solidaire d'un volant ordinaire et aussi d'un moteur à combustion du véhicule automobile pour être accouplé en rotation à un arbre vilebrequin du moteur, une machine électrique comportant un stator, un rotor, et un moyeu de support du rotor, et le moyeu de support du rotor étant relié par des moyens d'accouplement en rotation au couvercle d'embrayage.

Conformément à l'invention, les moyens d'accouplement en rotation comprennent des doigts solidaires du couvercle d'embrayage et des plots réalisés en un caoutchouc de synthèse en deux parties, chaque plot ayant une armature extérieure en deux parties et une armature intérieure en une seule partie, les doigts constituant des supports pour les plots.

Selon la conception de l'invention, l'armature est dimensionnée de façon que le volume d'un plot en caoutchouc soit celui qui est nécessaire à la réalisation de la fonction élastique quand il sera comprimé en place, d'une part, et que les efforts de précontrainte des deux parties de l'armature extérieure dans leur logement dans le moyeu du rotor soient toujours supérieurs aux efforts en service, d'autre part.

Par ailleurs, les deux parties de l'armature extérieure sont dimensionnées de manière que le plot en caoutchouc puisse être comprimé à une côte inférieure à celle de l'alvéole dans laquelle il doit être introduit, de façon que le montage se fasse sans effort axial.

Lorsqu'un plot est comprimé pour être inséré dans une alvéole, les deux parties de l'armature extérieure sont maintenues en une position rapprochée l'une de l'autre moyennant au moins deux agrafes. Les agrafes sont disposées par paires selon essentiellement deux dispositions. Selon la première disposition, les deux parties de l'armature extérieure sont maintenues en leur position rapprochée par une seule paire d'agrafes disposée dans un plan médian transversal par rapport à l'étendue longitudinale du plot. Selon une deuxième disposition, les deux parties de l'armature extérieure sont maintenues par deux paires d'agrafes disposées dans des plans parallèles et transversaux par rapport à l'étendue longitudinale du plot.

Indépendamment du nombre de paires d'agrafes utilisées, les deux parties de l'armature extérieure sont conformées de manière qu'une agrafe de cette paire d'agrafes puisse être introduite d'abord, par une de ses extrémités, dans une réservation pratiquée dans une des deux parties de l'armature extérieure et que l'autre agrafe de la paire d'agrafes puisse être introduite, par une de ces deux extrémités, dans une réservation pratiquée dans l'autre des deux parties de l'armature extérieure. Ensuite, lorsque les deux parties de l'armature extérieure sont rapprochées en comprimant le plot en caoutchouc, chacune des deux agrafes, conformée de manière appropriée, est poussée dans une encoche pratiquée dans l'autre des deux parties de l'armature extérieure.

Lorsque les deux parties de l'armature extérieure sont maintenues dans la position rapprochée de montage par deux paires d'agrafes, les dispositions décrites ci-avant pour le cas de l'utilisation d'une seule paire d'agrafes, sont réalisées deux fois, et cela de manière que les réservations et les encoches correspondantes sont disposées sur les mêmes côtés de l'armature extérieure ou en diagonale comme cela est expliqué plus loin.

Les agrafes sont réalisées en un acier à ressort.

Les doigts, qui constituent des supports pour les plots en caoutchouc, sont conformés de manière à pouvoir être engagés dans des perçages pratiqués respectivement dans chacun des plots. Les doigts sont des tiges solidaires du couvercle d'embrayage et y sont fixés par rivetage ou soudage. Les doigts dont la section transversale a la même forme que les perçages des plots, s'étendent d'un côté du couvercle d'embrayage et sont circonférentiellement espacés de manière équidistante. En même temps, les doigts s'étendent parallèlement à l'arbre vilebrequin. Toutefois, sans sortir du principe de la présente invention, les doigts peuvent être orientés, selon une variante, de manière à former un faible angle aigu avec un axe parallèle à l'arbre vilebrequin.

Les agrafes utilisées pour le maintien rapproché temporaire des deux parties de l'armature extérieure des plots en caoutchouc sont choisies en ce qui concerne les caractéristiques de leurs matériaux et de la forme de ses extrémités de manière à ce que, au démarrage du moteur à combustion et à la première montée en régime de celui-ci, les efforts sont tels que les agrafes ne sont plus soumises à l'effort introduit en préparation et qu'elles libèrent donc les plots en caoutchouc. Une fois les deux parties de l'armature extérieure séparées, le fonctionnement normal des plots en caoutchouc est assuré.

Selon une variante, il est concevable, sans sortir du principe de la présente invention, de réaliser les agrafes en un matériau sensible à la chaleur. En ce cas, les plots sont enfermés et comprimés par une armature extérieure dont les deux parties sont maintenues rapprochées par des éléments de liaison en un matériau thermosensible. Ces éléments de liaison fondent ou cassent alors à la première montée en température du moteur à explosion.

Par extension, le principe d'enfermement et de compression d'un plot en caoutchouc par une armature extérieure selon la présente invention est applicable à toute mise en place d'un système d'isolation vibratoire, appelé un "silent bloc", et principalement à chaque fois que les conditions de montage ne permettent pas de placer des outillages de montage.

D'autres caractéristiques et avantages de l'invention ressortiront de la description ci-après d'un mode de réalisation de l'invention. La description est faite en référence aux dessins dans lesquels :

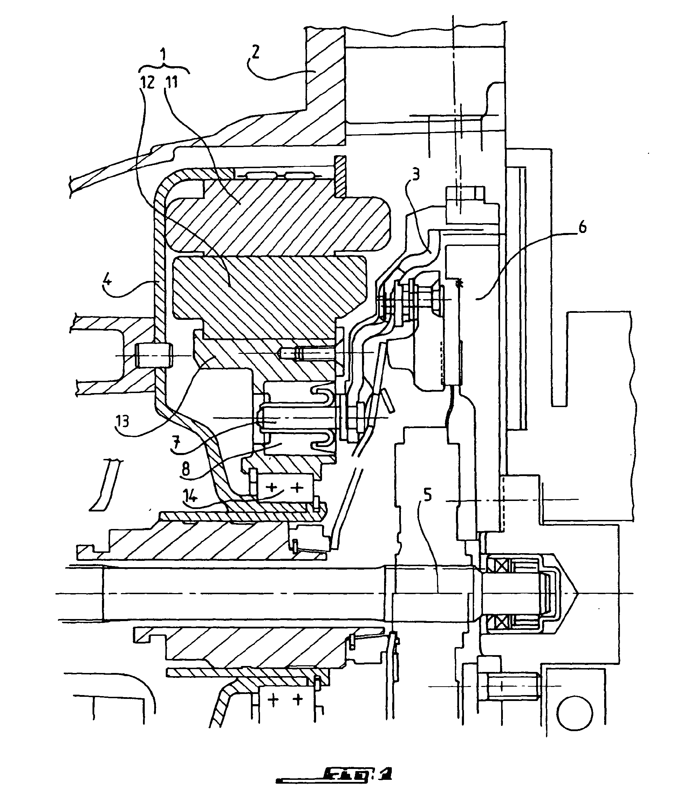

- la figure 1 représente un mode de réalisation du dispositif de fixation d'une machine électrique, telle qu'un alternateur-démarreur, dans un carter d'embrayage 2 fixé entre le carter de boîte de vitesses et le carter du moteur à combustion d'un véhicule automobile. Le carter d'embrayage 2 comporte un couvercle d'embrayage 3 solidaire d'un volant ordinaire 6 du moteur à combustion destiné à être accouplé en rotation à un arbre vilebrequin 5 du moteur. La machine électrique 1 comporte un stator 11, un rotor 12 et un moyeu de support 13 du rotor 12. Le moyeu de support 13 est relié par des moyens d'accouplement en rotation 7, 8 au couvercle d'embrayage 3.

Les moyens d'accouplement en rotation 7, 8 comprennent des doigts 7 solidaires du couvercle d'embrayage 3 et des plots 8 réalisés en un caoutchouc de synthèse en deux parties 81, 82. Les plots 8 sont adhésives sur les armatures extérieures 83, 84 en deux parties et sur une armature intérieure 85 en une seule partie. Les doigts 7 constituent des supports pour les plots 8.

Selon le mode de réalisation représenté sur les figures, les doigts 7 sont des tiges prismatiques solidaires du couvercle d'embrayage 3 par rivetage. Ils s'étendent d'un côté du couvercle d'embrayage 3, y sont circonférentiellement espacés de façon équidistante. Les doigts 7 s'étendent parallèlement à l'arbre vilebrequin 5.

Les plots 8 sont réalisés en un matériau élastomère tel que du silicone. Ils comprennent une paire d'agrafes 9, de préférence deux paires d'agrafes 9, destinées à maintenir les deux parties 83, 84 de l'armature extérieure temporairement en une position rapprochée l'une de l'autre pour la mise en place des plots. Les deux paires d'agrafes peuvent être montées parallèles ou anti-parallèles.

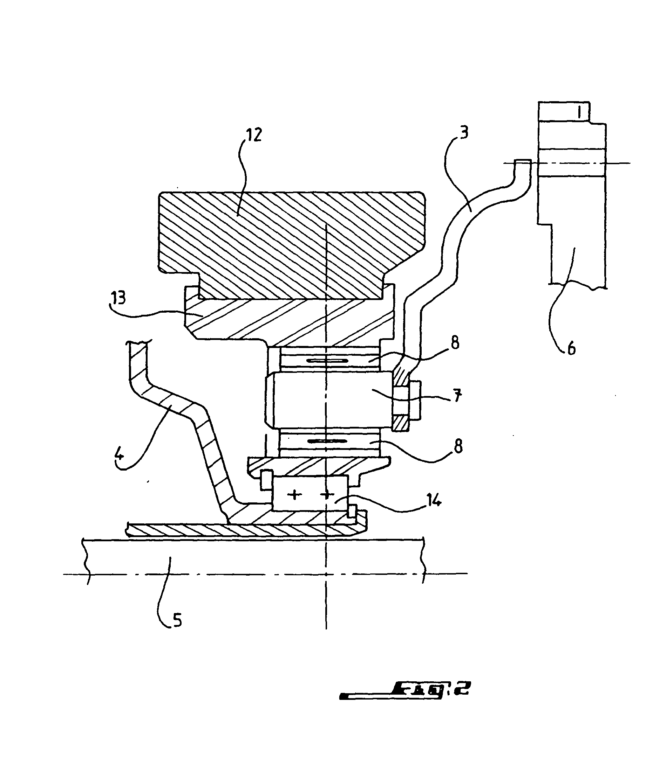

La figure 2 montre la disposition de la machine électrique notamment du rotor 12, du moyeu de support 13, d'un palier 14, par exemple un roulement à bille, ainsi que le couvercle d'embrayage 3, d'un doigt 7 et d'un plot 8 en détail.

Les plots 8 sont encastrés respectivement dans des cavités conjuguées réalisées circonférentiellement de façon équidistante dans le moyeu de support 13.

Le montage des plots 8 est effectué de la manière suivante. La première opération consiste à installer les plots 8 en position définitive sur les doigts 7.

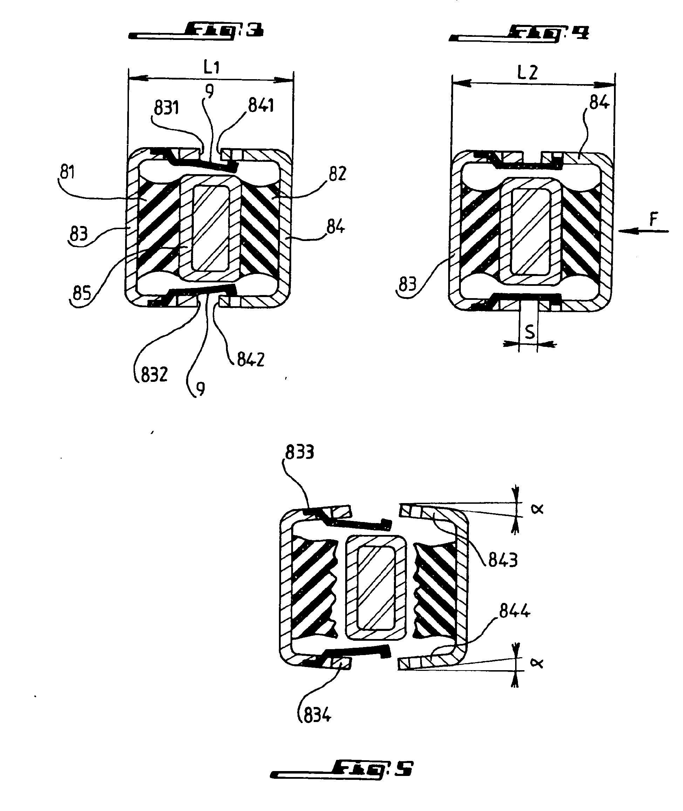

La deuxième opération consiste à préparer les plots, et notamment leur armature extérieure, pour l'insertion des plots dans les cavités conjuguées du moyeu 13. Au début de cette deuxième opération, les deux parties 83, 84 de l'armature extérieure se trouvent dans la position représentée sur la figure 3. La distance entre les deux parois parallèles opposées des deux parties de l'armature extérieure se trouve à une distance représentée par la côte L1. Cette côte L1 correspond à la largeur de chacune des cavités conjuguées réalisées dans le moyeu de support 13. L'application d'une force F dans le sens représenté sur la figure 4, permet de comprimer le plot 8 de manière à obtenir une côte L2 inférieure à la côté L1. La côte L2 doit être choisie de manière telle que la distance s (voir figure 4) entre les extrémités supérieures en regard, référencées 831, 841 et les extrémités inférieures en regard, référencées 832, 842, constitue un jeu de quelques dixièmes de millimètres. Ensuite, au moyen d'un outil adapté, les agrafes 9, qui sont insérées par une de leurs extrémités dans des évidements formés dans l'une ou dans l'autre des deux parties de l'armature extérieure, sont poussées de manière telle que l'extrémité libre s'engage dans une encoche prévue à cet effet dans l'autre partie de l'armature extérieure. En relâchant l'effort F, la côte L2 est réalisée et les agrafes sont maintenues en position par frottement telle que F divisé par 2 et multiplié avec un coefficient de frottement soit supérieur à l'effet de rappel de l'agrafe.

La troisième opération consiste à terminer le montage, c'est-à-dire introduire les plots 8 dans les cavités conjuguées correspondantes du moyeu de support 13. Puisque la côté L2 est maintenant inférieure à la côté L1, le montage est très aisé.

La quatrième opération du montage des plots consiste à libérer les plots, c'est-à-dire à défaire l'agrafage des deux parties de l'armature extérieure. Pour cela, on applique sur le plot 8 un effort légèrement supérieur à F, et cela dans sa direction, en développant un couple par le moteur électrique supérieur à ce qu'il développera en service normal. Une telle opération est en général possible parce qu'elle est quasi instantanée et donc sans conséquence pour la fiabilité du moteur électrique. Selon une variante, on peut également attendre les premiers couples en service et les chocs introduits par le jeu, chocs qui disparaîtront bien évidemment dès que la fonction élastique du plot sera redevenue active.

Tel que cela est représenté sur la figure 5, on peut avantageusement pourvoir l'armature extérieure d'un chant ayant un faible angle α, par exemple de l'ordre de 3°, sur les retours 833, 843, 834, 844 des deux parties de l'armature extérieure. De plus, ces faibles angles provoquent un effort de coincement et donc de blocage très important des plots 8 dans les cavités conjuguées avec un effort de précontrainte réduit dans le caoutchouc.

## Revendications

1. Carter d'embrayage (2) d'un véhicule automobile, le carter d'embrayage (2) comportant un couvercle d'embrayage (3) solidaire d'un volant d'inertie (6) d'un moteur à combustion du véhicule automobile pour être accouplé en rotation à un arbre vilebrequin (5) du moteur, une machine électrique (1) comportant un stator (11), un rotor (12) et un moyeu de support (13) du rotor (12) et le moyeu de support (13) du rotor (12) étant relié au couvercle d'embrayage (3) par des moyens d'accouplement en rotation comprenant des doigts (7) solidaires du couvercle d'embrayage (3) et des plots (8) réalisés en un caoutchouc, les doigts (7) constituant des supports pour les plots (8), **caractérisé en ce que** les plots (8) sont réalisés en caoutchouc de synthèse en deux parties (81, 82) ayant une armature extérieure (83, 84) en deux parties et une armature intérieure (85) en une seule partie.

2. Carter d'embrayage selon la revendication 1, **caractérisé en ce que** les doigts (7) sont des tiges prismatiques solidaires du couvercle d'embrayage (3) par rivetage ou soudage et s'étendant d'un côté de celui-ci en étant circonférentiellement espacés de façon équidistante.

3. Carter d'embrayage selon la revendication 1 ou 2, **caractérisé en ce que** les doigts (7) s'étendent parallèlement à l'arbre vilebrequin (5).

4. Carter d'embrayage selon l'une quelconque des revendications 1 à 3, **caractérisé en ce que** les plots (8) sont réalisés en un matériau élastomère tel que du silicone.

5. Carter d'embrayage selon la revendication 3, **caractérisé en ce que** les plots (8) comprennent au moins une paire d'agrafes (9) destinées à maintenir les deux parties (83, 84) de l'armature extérieure temporairement en une position rapprochée l'une dé l'autre pour la mise en place des plots (8).

6. Carter d'embrayage selon l'une quelconque des revendications 1 à 5, **caractérisé en ce que** les plots (8) comprennent deux paires d'agrafes (9) destinées à maintenir les deux parties (83, 84) de l'armature extérieure temporairement en une position rapprochée l'une de l'autre pour la mise en place des plots (8), les deux paires d'agrafes étant montées anti-parallèles.

7. Carter d'embrayage selon l'une quelconque des revendications 1 à 5, **caractérisé en ce que** les plots (8) comprennent deux paires d'agrafes (9) destinées à maintenir les deux parties (83, 84) de l'armature extérieure temporairement en une position rapprochée l'une de l'autre pour la mise en place des plots (8), les deux paires d'agrafes étant montées parallèles.

## Claims

1. A clutch housing (2) of a motor vehicle, the clutch housing (2) including a clutch cover (3) integral with an inertial fly wheel (6) of a combustion engine of the motor vehicle so as to be coupled in rotation with a crankshaft (5) of the engine, an electrical machine (1) including a stator (11), a rotor (12) and a hub (13) for supporting the rotor (12) and the hub (13) for supporting the rotor (12) being connected to the clutch cover (3) by rotational coupling means comprising fingers (7) firmly attached to the clutch cover (3) and studs (8) made in a rubber, the fingers (7) forming support for the studs (8), **characterized in that** the studs (8) are made in synthetic rubber in two portions (81, 82) having an outer frame (83, 84) in two portions and an inner frame (85) in a single portion.

2. The clutch housing according to claim 1, **characterized in that** the fingers (7) are prismatic rods firmly attached to the clutch cover (3) by riveting or welding and extending on one side of the latter by being circumferentially spaced out in an equidistant way.

3. The clutch housing according to claim 1 or 2, **characterized in that** the fingers (7) extend parallel to the crankshaft (5).

4. The clutch housing according to any of claims 1 to 3, **characterized in that** the studs (8) are made in elastomeric material such as silicone.

5. The clutch housing according to claim 3, **characterized in that** the studs (8) comprise at least a pair of clips (9) for maintaining both portions (83, 84) of the outer frame temporarily in a position close to each other for placing the studs (8).

6. The clutch housing according to any of claims 1 to 5, **characterized in that** the studs (8) comprise two pairs of clips (9) for maintaining both portions (83, 84) of the outer frame temporarily in a position close to each other for placing the studs (8), both pairs of clips being mounted anti-parallel.

7. The clutch housing according to any of claims 1 to 5, **characterized in that** the studs (8) comprise two pairs of clips (9) for maintaining both portions (83, 84) of the outer frame temporarily in a position close to each other for placing the studs (8), both pairs of clips being mounted parallel.

## Patentansprüche

1. Kupplungsgehäuse (2) eines Kraftfahrzeugs, wobei das Kupplungsgehäuse (2) einen Kupplungsdeckel (3) aufweist, der mit einem Schwungrad (6) eines Verbrennungsmotors des Kraftfahrzeugs verbunden ist, um rotierend an eine Kurbelwelle (5) des Motors gekoppelt zu sein, eine elektrische Maschine (1), die einen Stator (11), einen Rotor (12) und eine Nabe zum Halten (13) des Rotors (12) aufweist und wobei die Nabe zum Halten (13) des Rotors (12) mit dem Kupplungsdeckel (3) durch rotierende Kupplungsmittel verbunden ist, die Finger (7) umfassen, die mit dem Kupplungsdeckel (3) verbunden sind, und Kontakte (8), die aus einem Gummi bestehen, wobei die Finger (7) Halter für die Kontakte (8) bilden, **dadurch gekennzeichnet, dass** die Kontakte (8) aus synthetischem Gummi aus zwei Teilen (81, 82) hergestellt werden, mit einer zweiteiligen Außenhülle (83, 84) und einer einteiligen Innenhülle (85).

2. Kupplungsgehäuse nach Anspruch 1, **dadurch gekennzeichnet, dass** die Finger (7) prismatische Stifte sind, die mit dem Kupplungsdeckel (3) durch Nieten oder Schweißen verbunden sind und sich an einer Seite desselben erstrecken, wobei sie umfänglich abstandsgleich voneinander entfernt sind.

3. Kupplungsgehäuse nach Anspruch 1 oder 2, **dadurch gekennzeichnet, dass** sich die Finger (7) parallel zur Kurbelwelle (5) erstrecken.

4. Kupplungsgehäuse nach einem der Ansprüche 1 bis 3, **dadurch gekennzeichnet, dass** die Kontakte (8) aus einem Elastomermaterial wie Silikon hergestellt sind.

5. Kupplungsgehäuse nach Anspruch 3, **dadurch gekennzeichnet, dass** die Kontakte (8) mindestens ein Paar Klammern (9) umfassen, die dazu bestimmt sind, die zwei Teile (83, 84) der Außenhülle zeitlich vorübergehend in einer einander angenäherten Stellung zu halten, um die Kontakte (8) zu platzieren.

6. Kupplungsgehäuse nach einem der Ansprüche 1 bis 5, **dadurch gekennzeichnet, dass** die Kontakte (8) zwei Paar Klammern (9) umfassen, die dazu bestimmt sind, die zwei Teile (83, 84) der Außenhülle zeitlich vorübergehend in einer für die Platzierung der Kontakte (8) einander angenäherten Stellung zu halten, wobei die zwei Paar Klammern anti-parallel montiert sind.

7. Kupplungsgehäuse nach einem der Ansprüche 1 bis 5, **dadurch gekennzeichnet, dass** die Kontakte (8) zwei Paar Klammern (9) umfassen, die dazu bestimmt sind, die zwei Teile (83, 84) der Außenhülle zeitlich vorübergehend in einer für die Platzierung der Kontakte (8) einander angenäherten Stellung zu halten, wobei die zwei Paar Klammern parallel montiert sind.
